# EUROPEAN PATENT SPECIFICATION

(11) **EP 2 261 075 B1**
(45) Date of publication and mention of the grant of the patent: **02.09.2015**
(21) Application number: 09161531.0
(22) Date of filing: 29.05.2009
(51) Int. Cl.: B60N 2/02, B60N 2/70

(54) **Cushion mat assembly for use in a vehicle seat**
Kissenmattenanordnung zur Verwendung in einem Fahrzeugsitz
Ensemble de garnissage à utiliser dans le siège d'un véhicule

(43) Date of publication of application: 15.12.2010
(73) Proprietor: Fico Cables, Lda., 4471-263 Maia (PT)
(72) Inventor: Barros, João, 4470-263 Maia (PT); Faria, Manuel, 4470-263 Maia (PT); Ribeiro, Susana, 4470-263 Maia (PT)
(74) Representative: ZBM Patents - Zea, Barlocci & Markvardsen

(56) References cited:
- DE-A1- 19 802 223
- DE-A1-102008 006 019
- DE-U1-202008 011 499

## Description

### Field of the invention

The present invention relates to a **vehicle seat having a** cushion mat assembly **as defined in the preamble of claim 1**. The cushion mat assembly as used herein refers to an assembly comprising a spring structure that is particularly useful in seats that are adjustable in depth, for example seats for motor vehicles and other depth adjustable seats.

### BACKGROUND ART

Motor vehicle seats typically comprise a back portion and a seat portion with the latter having a movable seat frame. More particularly, depth adjustable vehicle seats comprise a seat frame formed of mutually movable parts that can be adjusted to conform with the particular size of the user are known.

One example of an adjustable vehicle seat is disclosed in US6109693 comprising a support that is formed of a front part and of a back part, which are connected with each other through a spring structure. The seat depth can be adjusted by moving the two parts relative to each other.

A further example is shown in KR20050024689 in which a position adjustable seat cushion assembly of a vehicle is provided wherein the position of a cushion pad and a cushion pan can be longitudinally adjusted. This seat cushion assembly comprises a cushion pan on which the cushion pad is fixed; a tilting support body to which the cushion pan is placed and assembled; and a locking mechanism installed at the side of the cushion pan to lock or release the cushion pan and the tilting support body while the longitudinal position of the cushion pan is regulated. The cushion pan is assembled on the upper part of the tilting support body to slide longitudinally by a guide unit.

Document DE102008006019A discloses a vehicle seat according to the preamble of claim 1.

The main disadvantage of these vehicle seat cushion assemblies is that the spring structure is engaged to parts of the seat such that an alteration of the relative position of said parts of the seat result in a modification in the cushion properties.

The object of the invention is to provide a cushion mat assembly for a vehicle seat such that seat depth can be adjusted to conform to users' requirements while cushion properties are kept constant regardless of seat depth adjustment.

### SUMMARY OF THE INVENTION

The invention provides a **vehicle seat having a** cushion mat assembly particularly a depth adjustable vehicle seat. As used herein, the term seat or vehicle seat denotes the seat frame portion of a standard (vehicle) seat that comprises two different, mutually slidable parts such that the seat can be adjustable in depth (i.e. in seat length) for varying the seat bottom surface.

The **vehicle seat** according to the invention comprises a **cushion mat assembly having a** spring structure made of snake wires and plastic links suitable for user's comfort. The cushion mat assembly further includes a substantially rigid frame for carrying said spring structure.

The substantially rigid frame of the cushion mat assembly according to the invention is provided with attaching means to said respective slidable parts of the vehicle seat. In this way, the position of the spring structure can be varied relative to the vehicle seat during adjusting operations of the seat depth while keeping the resilient features of the cushion mat assembly regardless of the position of the spring structure relative to the slidable parts of the seat.

The spring structure is further provided with coupling means to the substantially rigid frame and to one of said two different, mutually slidable parts of the vehicle seat, respectively. In other embodiments of the invention, the rigid frame may be integrally formed-with the spring structure (e.g. overmolded together).

The rigid frame exhibits a geometry suitable for being fitted to standard adjustable vehicle seats. In one embodiment of the substantially rigid frame, it may be in the form of a generally U shaped wire. Other constructions and shapes are possible, such as for example, in the form of a substantially T-shaped wire. In all the envisaged embodiments, the substantially rigid frame may be shaped such that it is wider at the rear so that the user does not feel it when seated down.

The cushion mat can be thus manufactured with the necessary pre-tension which is advantageously kept in use and throughout seat adjustment operations. For this purpose, the attaching means, which are associated with the substantially rigid frame, are adapted to allow the spring structure to slide relative to at least one of said slidable parts of the vehicle seat during adjusting operations. More particularly, the attaching means may comprise T shaped extensions suitable for running along respective grooves formed in one of said two parts of the vehicle seat. Of course other suitable shapes for the attaching means may be also provided as long as making it possible the rigid frame to be assembled in the vehicle seat structure without causing any noise or interference with other parts.

The attaching means in the substantially rigid frame is further provided with hooks suitable to engage one of said slidable parts of the vehicle seat and cooperating with said comprise T shaped extensions. In turn, the coupling means in the spring structure may also comprise hooks suitable to engage one of said slidable parts of the vehicle seat (the spring structure is coupled to the other of said slidable parts of the vehicle seat through the substantially rigid frame).

Provision is also made for said vehicle seat having fixing means for fixing the relative position of both mutually slidable parts.

During depth adjustment of the seat (seat frame as used herein) by an user, the cushion mat is held in position as the seat frame slides relative to it without affecting its mechanical properties.

### BRIEF DESCRIPTION OF THE DRAWINGS

A particular embodiment of a cushion mat assembly for use in a vehicle seat according to the present invention will be described in the following, only by way of non-limiting example, with reference to the appended drawings, in which:
Fig. 1 is a plan view of one embodiment of a depth adjustable vehicle seat provided with a cushion mat assembly according to the invention;
Fig. 2 is an elevational view of one embodiment of the spring structure of the cushion mat assembly in Fig. 1;
Fig. 3 is a top plan view of the embodiment of the spring structure in Fig. 2;
Fig. 4 is a fragmentary perspective view showing a detail of the T shaped extensions of the attaching means in the rigid interface;
Figs. 5 is a perspective view of the cushion mat assembly of the invention;
Fig. 6 is a perspective view of the depth adjustable vehicle seat provided with a cushion mat assembly as shown in Fig. 1;
Fig. 7 is a perspective view of one embodiment of the rigid interface shown alone; and
Fig. 8 is a fragmentary sectional view of a detail of the rigid interface taken along line AA in Fig. 1.

### DETAILED DESCRIPTION OF PARTICULAR EMBODIMENTS

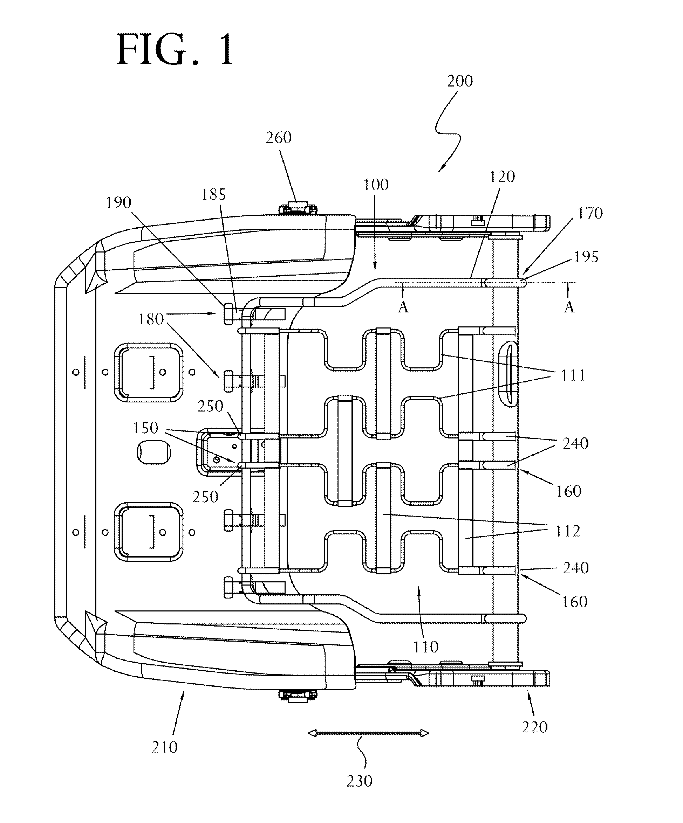

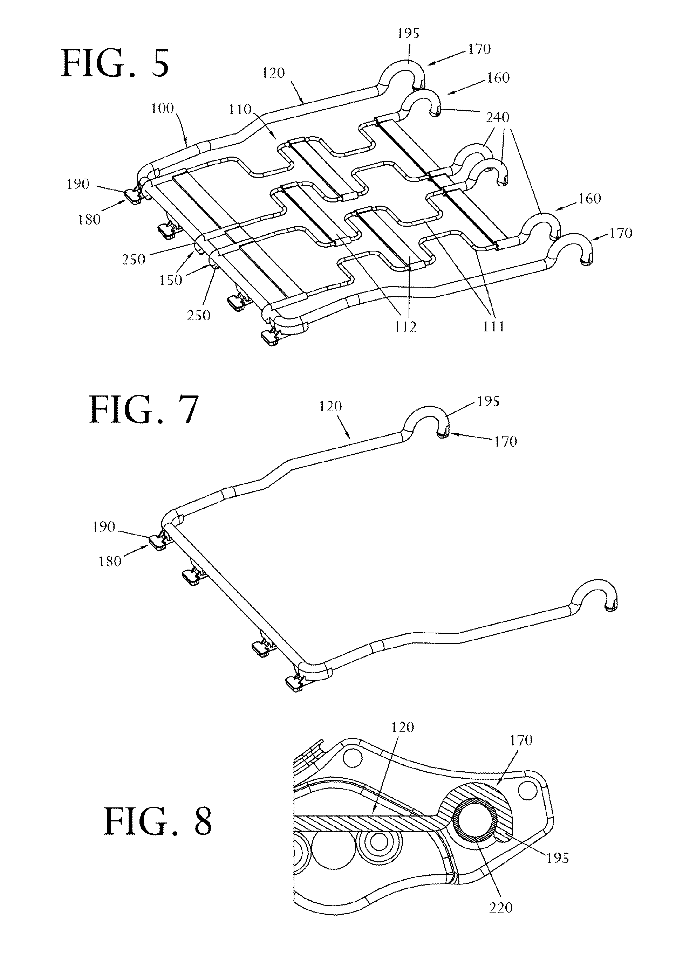

One embodiment of the cushion mat assembly of the invention is shown in the figures 1-8. The cushion mat assembly has been indicated as a whole at 100 and the vehicle seat at 200.

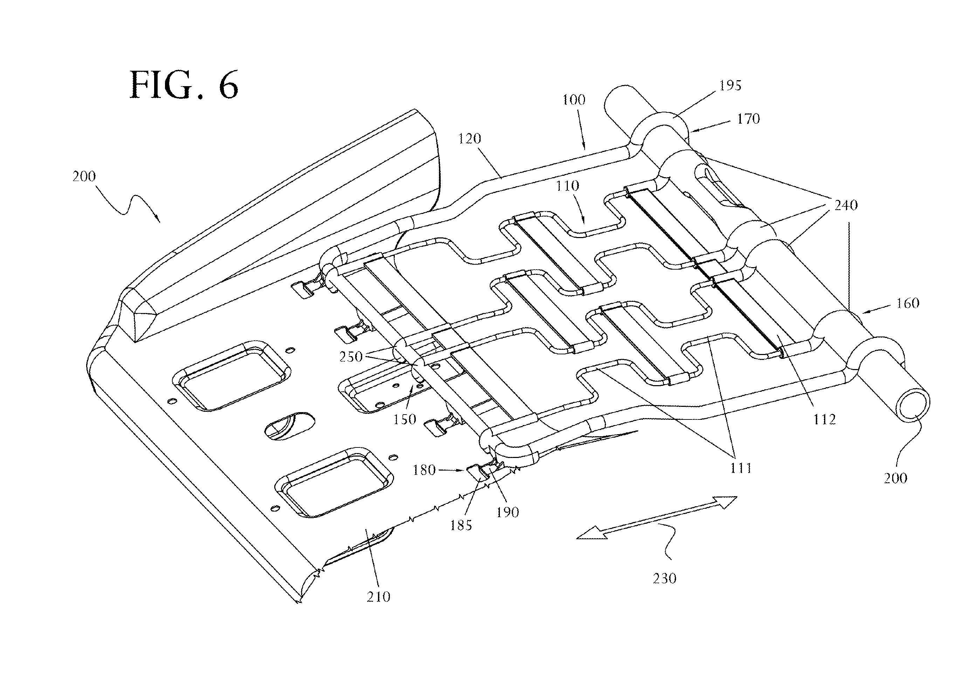

Referring the figures, an adjustable vehicle seat 200 comprises a seat frame formed of two different, mutually slidable parts 210, 220. Parts 210 220 can be moved to each other through two directions along line 230 (see Figs. 1 and 6) for adjusting the bottom surface of the seat 200 when depth seat is desired to be adjusted according to user's requirements. The vehicle seat 200 further includes fixing means 260 (Fig. 1) for fixing the relative position of said mutually slidable parts 210, 220 when depth seat adjustment has been already completed.

Arranged between said two mutually slidable parts 210, 220 of the vehicle seat 200 is a cushion mat assembly 100. As shown in the figures, the cushion mat assembly 100 includes a spring structure 110 made of a series of snake wires 111 and plastic links 112 suitably arranged for user's comfort. Wires and links 111, 112 in the spring structure 110 may of course have any other construction according to requirements.

The cushion mat assembly 100 further includes a interface in the form of a substantially rigid frame 120 that, in use, substantially surrounds the periphery of the spring structure 110. In the embodiment shown, the substantially rigid frame 120 is in the form of a substantially U shaped wire (or C shaped when viewed in the drawing arrangement) suitable for carrying and supporting the spring structure 110. This geometry may be different depending on the seat frame where is to be fitted.

The substantially rigid frame 120 makes the resilient features of the spring structure 110 to be maintained in use and during seat depth adjusting operations. Therefore, comfort features associated with cushion mat assembly 100 are maintained.

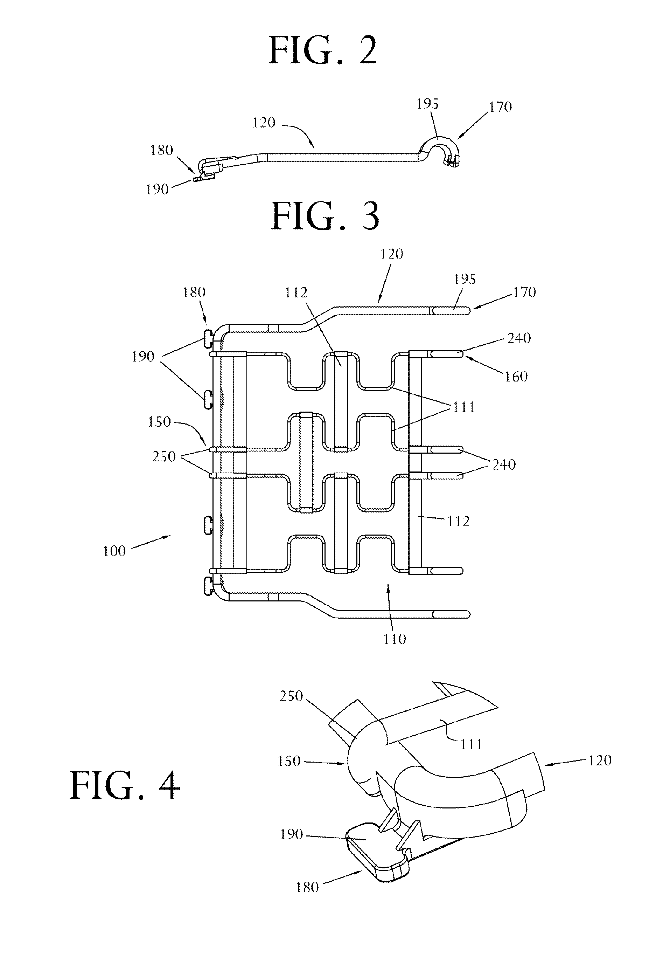

The rigid frame 120 carrying the spring structure 110 is provided with attaching means 170, 180 to the respective two mutually slidable parts 210, 220 of the vehicle seat 200. The construction of the attaching means 170, 180 is such that the position of the spring structure 110 can be varied through line 230 relative to the vehicle seat 200 for adjusting vehicle seat depth. In this respect, the attaching means 180 are adapted to allow the spring structure 110 to slide relative to one of said slidable parts 210 of the vehicle seat 200 (see, again, Figs. 1 and 6) by being provided with T shaped extensions 190, as shown in detail in Fig. 4. During adjustment operations, extensions 190 are capable of running along respective grooves 185 formed in the slidable part 210 of the vehicle seat 200. The attaching means 170 comprise hooks 195 shaped to engage the other slidable part 220 of the vehicle seat 200.

The spring structure 110 is provided with coupling means 150, 160 to the substantially rigid frame 120 and to one of said two different, mutually slidable parts 210, 220 of the vehicle seat 200, respectively. More particularly, in the embodiment shown, the coupling means 160 comprise hooks 240 suitable to engage one the slidable part 220 of the vehicle seat 200. Likewise, coupling means 150 further include hooks 250 for engaging the rigid frame 120 in the event that both the spring structure 110 and the rigid frame 120 are made as separate parts. This arrangement enables the cushion mat assembly 100 to be directly and easily assembled in the seat frame.

## Claims

1. Vehicle seat (200) comprising two different, mutually slidable parts (210, 220) and a cushion mat assembly (100), **characterised in that** the cushion mat assembly (100) comprises a spring structure (110) and a substantially rigid frame (120) for carrying the spring structure (110), said rigid frame (120) is being provided with attaching means (170, 180) to said respective slidable parts (210, 220) of the vehicle seat (200) such that the position of the spring structure (110) can be varied relative to one of said slidable parts (210, 220) of the vehicle seat (200), wherein the spring structure (110) is provided with coupling means (150, 160) to the substantially rigid frame (120) and to one of said two different, mutually slidable parts (210, 220) of the vehicle seat (200), respectively.

2. Vehicle seat (200) as claimed in claim 1, wherein the rigid frame (120) of the cushion mat assembly (100) is integrally formed with the spring structure (110).

3. Vehicle seat (200) as claimed in any of the preceding claims, wherein the attaching means (170, 180) of the cushion mat assembly (100) are adapted to allow the spring structure (110) to slide relative to at least one of said slidable parts (210, 220).

4. Vehicle seat (200) as claimed in claim 3, wherein said attaching means (180) of the cushion mat assembly (100) comprise T shaped extensions (190) suitable for running along respective grooves (185) formed in one of said two parts (210, 220).

5. Vehicle seat (200) as claimed in any of the preceding claims, wherein the attaching means (170) of the cushion mat assembly (100) comprise hooks (195) suitable to engage one of said slidable parts (210, 220).

6. Vehicle seat (200) as claimed in claim 1, wherein the coupling means (150, 160) of the cushion mat assembly (100) comprise hooks (250, 240) suitable to engage one of said slidable parts (210, 220).

7. Vehicle seat (200) as claimed in any of the preceding claims, wherein it further includes fixing means (260) for fixing the relative position of said mutually slidable parts (210, 220).

## Patentansprüche

1. Fahrzeugsitz (200) umfassend zwei verschiedene, gegenseitig verschiebbare Teile (210, 220) und eine Kissenmattenanordnung (100), **dadurch gekennzeichnet, dass** die Kissenmattenanordnung (100) eine Federstruktur (110) und einen im Wesentlichen steifen Rahmen (120) zum Tragen der Federstruktur (110) umfasst, wobei der steife Rahmen (120) mit einem Befestigungsmittel (170, 180) für die jeweiligen verschiebbaren Teile (210, 220) des Fahrzeugsitzes (200) versehen ist, so dass die Position der Federstruktur (110) geändert bezüglich eines der verschiebbaren Teile (210, 220) des Fahrzeugsitzes (200) werden kann, wobei die Federstruktur (110) mit einem Kupplungsmittel (150, 160) für den im Wesentlichen steifen Rahmen (120) und für einen der zwei verschiedenen, gegenseitig verschiebbaren Teile (210, 220) des Fahrzeugsitzes (200) jeweils versehen ist.

2. Fahrzeugsitz (200) wie in Anspruch 1 beansprucht, wobei der steife Rahmen (120) der Kissenmattenanordnung (100) einstückig mit der Federstruktur (110) gebildet ist.

3. Fahrzeugsitz (200) wie in einem der vorhergehenden Ansprüche beansprucht, wobei das Befestigungsmittel (170, 180) der Kissenmattenanordnung (100) angepasst ist, um zu ermöglichen, dass die Federstruktur (110) bezüglich mindestens eines der verschiebbaren Teile (210, 220) gleitet.

4. Fahrzeugsitz (200) wie in Anspruch 3 beansprucht, wobei das Befestigungsmittel (180) der Kissenmattenanordnung (100) T-Verlängerungen (190) umfasst, die zum Durchgang durch die jeweiligen in einem der zwei Teile (210, 220) gebildeten Nuten (185) geeignet sind.

5. Fahrzeugsitz (200) wie in einem der vorhergehenden Ansprüche beansprucht, wobei das Befestigungsmittel (170) der Kissenmattenanordnung (100) Haken (195) umfasst, die zum Einschnappen in einem der verschiebbaren Teile (210, 220) geeignet sind.

6. Fahrzeugsitz (200) wie in Anspruch 1 beansprucht, wobei das Kupplungsmittel (150, 160) der Kissenmattenanordnung (100) Haken (250, 240) umfasst, die zum Einschnappen in einem der verschiebbaren Teile (210, 220) geeignet sind.

7. Fahrzeugsitz (200) wie in einem der vorhergehenden Ansprüche beansprucht, wobei er weiterhin ein Fixierungsmittel (260) zum Fixieren der relativen Position der gegenseitig verschiebbaren Teile (210, 220) beinhaltet.

## Revendications

1. Siège de véhicule (200) comprenant deux parties (210, 220) différentes, mutuellement coulissantes et un ensemble de garnissage (100), **caractérisé en ce que** l'ensemble de garnissage (100) comprend une structure de ressort (110) et un cadre (120) essentiellement rigide pour porter la structure de ressort (110), étant ledit cadre rigide (120) fourni avec un moyen d'attache (170, 180) auxdites parties (210, 220) coulissantes respectives du siège de véhicule (200) de façon que la position de la structure de ressort (110) peut être variée par rapport à une desdites parties (210, 220) coulissantes du siège de véhicule (200), dans lequel la structure de ressort (110) est fournie avec un moyen de couplage (150, 160) audit cadre (120) essentiellement rigide et à une desdites deux parties (210, 220) différentes, mutuellement coulissantes du siège de véhicule (200), respectivement.

2. Siège de véhicule (200) tel que revendiqué dans la revendication 1, dans lequel le cadre rigide (120) de l'ensemble de garnissage (100) est formé de façon intégrale avec la structure de ressort (110).

3. Siège de véhicule (200) tel que revendiqué dans l'une quelconque des revendications précédentes, dans lequel le moyen d'attache (170, 180) de l'ensemble de garnissage (100) est adapté pour permettre que la structure de ressort (110) coulisse par rapport à au moins une desdites parties (210, 220) coulissantes.

4. Siège de véhicule (200) tel que revendiqué dans la revendication 3, dans lequel ledit moyen d'attache (180) de l'ensemble de garnissage (100) comprend des rallonges en T (190) appropriées pour passer pour les encoches (185) respectives formées dans une desdites deux parties (210, 220).

5. Siège de véhicule (200) tel que revendiqué dans l'une quelconque des revendications précédentes, dans lequel le moyen d'attache (170) de l'ensemble de garnissage (100) comprend des hameçons (195) appropriés pour accrocher une desdites parties (210, 220) coulissantes.

6. Siège de véhicule (200) tel que revendiqué dans la revendication 1, dans lequel le moyen de couplage (150, 160) de l'ensemble de garnissage (100) comprend des hameçons (250, 240) appropriés pour accrocher une desdites parties (210, 220) coulissantes.

7. Siège de véhicule (200) tel que revendiqué dans l'une quelconque des revendications précédentes, dans lequel il inclut en outre un moyen de fixation (260) pour fixer la position relative des dites parties (210, 220) mutuellement coulissantes.
